# EUROPEAN PATENT SPECIFICATION

(11) **EP 0 443 882 B1**
(45) Date of publication and mention of the grant of the patent: **01.05.1996**
(21) Application number: 91301472.6
(22) Date of filing: 25.02.1991
(51) Int. Cl.: E01H 1/08, A01G 1/12, A47L 9/08

(54) **Improvements relating to collection devices**
Sammelvorrichtung
Dispositif collecteur

(30) Priority: 23.02.1990 GB 9004076
(43) Date of publication of application: 28.08.1991
(73) Proprietor: Coathupe, John Edward, Broughton, Nr. Chester, CH4 ORP (GB)
(72) Inventor: Coathupe, John Edward, Broughton, Nr. Chester, CH4 ORP (GB)
(74) Representative: Geoffrey Owen & Company

(56) References cited:
- BE-A- 890 518
- FR-A- 2 541 701
- US-A- 1 383 455
- US-A- 3 004 279
- US-A- 4 018 483

## Description

The present invention relates to a collection device for use in collecting loose material from a surface.

More particularly the present invention relates to a collection device for use in collecting loose material such as litter, debris, lawn cuttings and/or fallen leaves. The collection device is primarily for outdoor use though it may equally well be used indoors as and when appropriate.

Existing collection devices such as domestic vacuum/suction cleaners are primarily designed for cleaning upholstery and carpets and are not really suitable for use outdoors. They are usually limited by weight, area of suction head and the cross-section of the tube connecting the suction head with a motor-driven fan for providing the suction, and a collection bag. Further, a large motor is required to overcome the various filters which are necessary whilst maintaining sufficient suction to extract/lift dirt, debris etc. and transport it to the collection bag.

Known industrial and horticultural vacuum/suction cleaners usually comprise an internal combustion engine, a fan and a collection bag. However, these devices are meant for use outside of a domestic situation and are generally large and expensive, and whilst mobile, they are not versatile.

However in both of the above known collection devices the loose material is collected by suction and has to pass through the fan arrangement, and this can and does cause problems with larger items, such as empty drink cans. Further a large amount of suction force is required to lift the loose material, thus necessitating a large, powerful motor which clearly adds to the weight and cost of the collection device.

Further known collection devices designed for removing loose material from a fixed surface by means of a stream of air, utilise the stream of air to dislodge and entrain the said material with the stream of air being effectively directed at and bounced off the fixed surface. One such known construction is disclosed in US-A- 1383455 wherein the construction has a collection mouth which is neccesarily engaged with the fixed surface i.e. carpet or ground, so that the stream of air bounced off the fixed surface can only pass into a collection channel, entraining any loose material disturbed by the impact of the stream of air fitting the fixed surface. A similar construction is also disclosed in US-A- 4018483.

The aim of the present invention is to provide a collection device which utilises a stream of air so as to lift and collect loose material off a fixed surface, this being in contrast to the known prior art devices wherein the loose material is collected either by suction or by utilising a stream of air to purely disturb and then entrain such loose material.

According to the present invention there is provided a collection device for removing loose material from a fixed surface by means of a stream of air, the collection device comprising an elongate duct through which the loose material is conveyed from an upstream end region of the duct defining a collection mouth towards a downstream region of the duct when the collection mouth is disposed in a ready to collect position relative to the fixed surface, a source of pressure air and means for feeding pressure air to one or more air outlets disposed in the region of the collection mouth to provide a stream of air for use in conveying loose material lifted from the fixed surface, into and along the duct, characterised in that an air outlet opens directly into the duct and is located in the region of one end of a control surface, at least part of which control surface is generally convex, the control surface extending downstream of the duct, said air outlet being arranged to direct a stream of air over the control surface whereby the stream of air issuing from the air outlet is directed in a direction transverse of the longitudinal axis of the duct, and is directed within the duct and generally downstream within the duct, when the collection mouth is spaced above the fixed surface, the stream of air issuing from the air outlet inducing an additional flow of atmospheric air into the duct via the collection mouth to assist in lifting loose material from the fixed surface and in conveying the material downstream within the duct.

By directing the air flow over a curved flow control surface, at least a portion of the air flow follows the contour of the curved flow control surface by virtue of the boundary layer effect. By having a very smooth curved flow control surface, laminar air flow is achieved and the boundary layer of air adjacent to the surface is very thin. In this instance a streamlined flow of air over the curved control surface results, and at least a major portion of the air flow follows said curved surface and enters said duct. Thus a positive air flow is provided along the duct away from the collection mouth, causing air to be drawn into the collection mouth together with any loose material in the vicinity of the collection mouth. The lifting of any such loose material, e.g. leaves, drink cans, etc., is enhanced by the fact that any such loose material will be near to one particular region of the curved flow control surface and the air thus increases speed in the gap between this one particular region and said material, causing a drop in air pressure in the gap, which drop in pressure pulls the loose material towards the curved flow control surface, i.e. the loose material is lifted off the ground.

The loose material is then passed along the duct to a collection container at the downstream region of the duct, by the air flow, and as the duct is merely a passage with no fan or other auxiliary component causing at least a partial obstruction or a tortuous flow path, it can provide a relatively smooth path which facilitates the collection of a large variety of shapes and sizes of loose material.

In a preferred embodiment of the present invention said duct is provided with outwardly flaring front and rear edge regions, each of which edge regions is curved and ends in an air flow outlet. Each air flow outlet is connected to a motor driven fan with the outlet being so designed as to direct a flow of air at an inclined angle to the longitudinal axis of the duct, substantially along a smoothly curved surface, into the duct, part of the outlet merging with the smoothly curved surface and said smoothly curved surface merely merging with and continuing as the inside wall of the duct. As previously mentioned at least a major part of the air flow will follow the curved surface and enter the duct due to the boundary layer effect, the remainder of the air flow disturbing the loose material beneath the collection mouth and thus facilitating the loose material being drawn into the duct by the air flow. Whilst the front and rear edge regions of the collection mouth may be provided with curved surfaces and associated air flow outlets, solely the front or rear edge region may be so designed or alternatively one or other side edge regions may be additionally or alternatively so designed, as is required.

The collection device is preferably designed so as to be hand-held with the motor driven fan being electrically driven. Alternatively, the device may be mounted on wheels and/or the fan may be driven by alternative power means, e.g. an internal combustion engine. Preferably the collection device is designed so that when it is hand-held, with the collection mouth aligned with the ground in a ready-for-use position, the elongate duct is inclined to the ground.

The collection container may be a disposable plastic bag which can be easily detachably attached to the downstream end region of the duct with a filter outlet allowing the air flow to escape adjacent to the container, or alternatively a loose-woven bag may form the collection container obviating the need for a filter outlet.

In a modified embodiment of the present invention a controllable air flow outlet is provided so as to allow a flow of air to be directed out from the collection device, as and when desired, preferably in the region of the collection mouth. By guiding the collection device and thus the direction of this flow of air our from the collection device, material to be collected can be disturbed and/or collected together prior to the collection mouth being moved thereover.

The present invention will now be further described, by way of example, with reference to the accompanying drawings, in which:-
Fig.1 is a perspective view of a presently preferred embodiment of the present invention;
Fig.2 is a front view, partially in cross section, of the lower part of the device of Fig.1, which forms a collection mouth; and
Fig.3 is a cross-sectional side view of the lower part of Fig.2.

The presently preferred embodiment of a collection device of the present invention illustrated in the accompanying drawings, comprises an elongate duct member 1 through which a generally smooth profile duct 3 extends, with a collection head 5 defining a collection mouth 7 at one end region i.e. the upstream end region, of the duct 3, and a collection container 9 detachably secured at the other end region i.e the downstream end region of the duct 3.

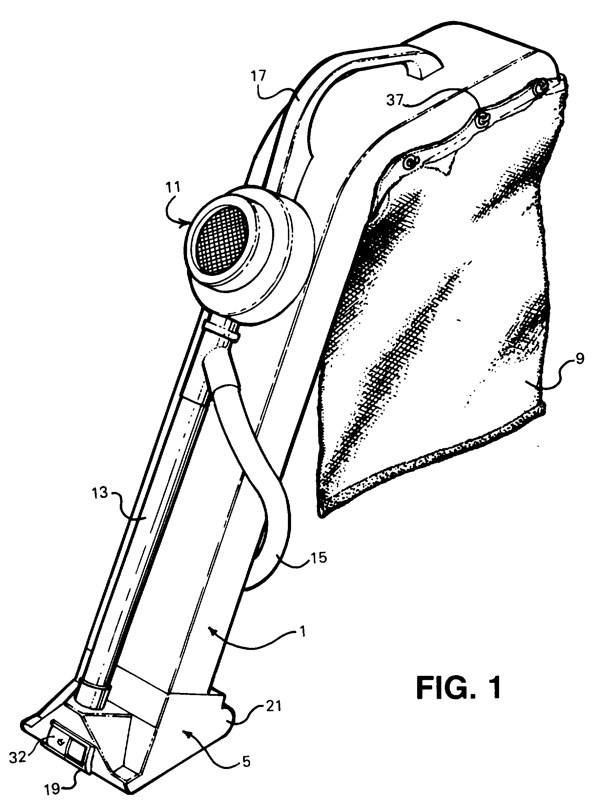

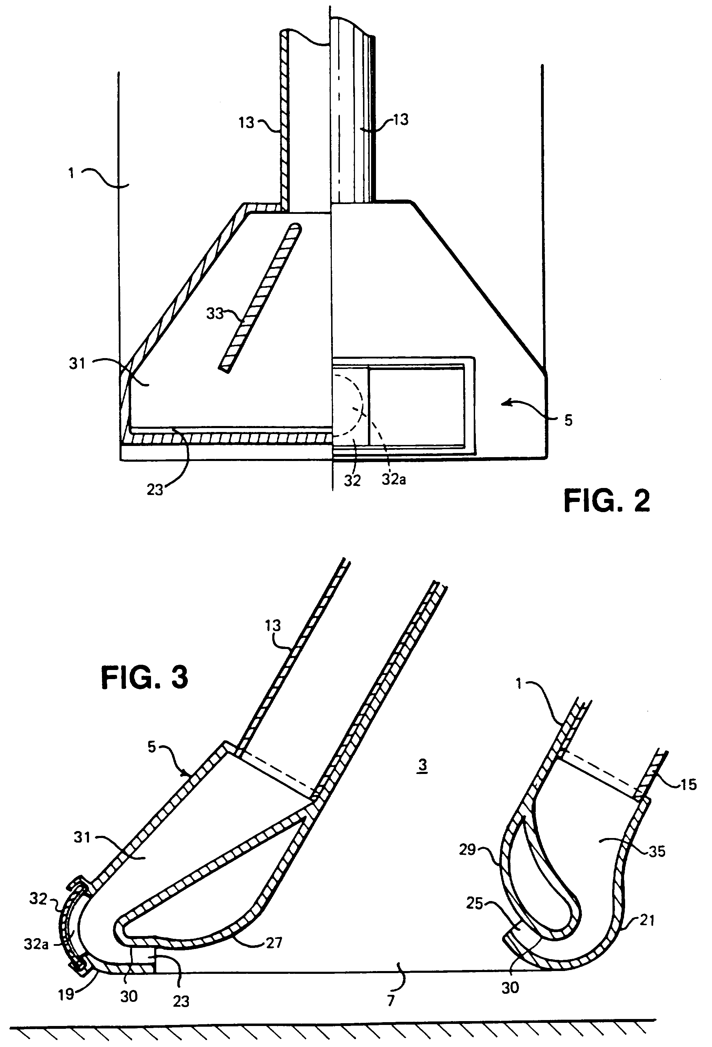

The collection device includes an electric motor and fan 11 which is mounted on the outside of the duct member 3 and which connects with front and rear edge regions of the collection head 5 via pipes 13 and 15, respectively. The motor 11 and/or pipes 13 and 15 can of course be constructed as an integral part of the duct member 3 and hidden from sight within the duct member 3 to improve the aesthetics of the device. The motor 11 is connected to an electricity supply by a cable (not shown) and switched on and off by a switch provided in a handle 17, the handle 17 enabling the collection device to be moved by hand as desired, to pass the collection head 5 over loose material to be collected. As evident in Figs. 1 and 3, the collection device is designed so that with the collection head 5 aligned with the ground, the duct 3 is inclined to the ground, thereby facilitating entrainment of loose material along the duct 3 as compared to a vertical duct.

The collection head 5, as best seen in Figs. 2 and 3 of the accompanying drawings, is generally rectangular with front and rear edge regions 19 and 21 respectively, being each provided with an air outlet 23,25 which is arranged to direct an air flow generally along an adjacent curved surface 27,29, one part 30 of each air flow outlet 23,25 being formed by a continuation of the adjacent curved surface 27,29, to thus cause the air to flow along and against the respective curved surfaces. Due to the boundary layer effect, and the provision of a smoothly curved surface 27,29, laminar and streamlined air flow results so that the major part of the air flow from each outlet 23,25 follows the profile of the respective curved surface 27,29 into the duct 3, the remainder disturbing any loose material located beneath the collection mouth 7 and facilitating entrainment of this loose material into the air flow along the duct 3.

Entrainment of loose material into the air flow along the duct 3 is specifically enhanced by the fact that the material to be collected will be closer to one part of a curved surface 27,29 than another when the collection mouth 7 is passed thereover. Thus the air flow through the gap between the material and said close part of the curved surface 27,29 will be increased causing a drop in air pressure in the gap and resulting in the material being drawn nearer to the curved surface, i.e. lifted off the ground, the air flow into the duct 3 carrying the material along the duct. 3.

The air outlet 23 at the front edge region 19 of the collection mouth 7, extends as a narrow slot across the width of the collection head 5, and leads from a plenum chamber 31 which is connected to air flow pipe 13. A number of angled baffles 33 are provided in the plenum chamber 31 to provide for an even distribution of the air flow emanating from the pipe 13, across the slot forming the outlet 23.

As will be seen in Figs. 1 and 3 of the accompanying drawings, a slidable flap 32 is provided in the outer wall of the plenum chamber 31. Thus, when desired, this flap 32 can be moved to open a blower outlet 32a of the collection device, thereby providing a flow of air away from the collection head 5, which air flow can be used, by guiding the collection device and thus the direction of this air flow, to disturb and/or collect material together before the collection head is moved thereover. As opposed to the slidable flap 32, a hinged flap or any other controllable outlet can be substituted.

The air outlet 25 at the rear edge region 21 of the collection mouth 7, also extends as a narrow slot across the width of the collection head 5. This outlet 25 leads from a plenum chamber 35 which is connected to air flow pipe 15.

Whilst air outlets and associated curved surfaces are provided in the presently preferred embodiment of the present invention, at the front and rear edge regions of the collection mouth 7, one or other outlets could be omitted or blanked off, as desired. Further, air outlets and associated curved surfaces can be provided on the side edge regions of the collection mouth, additionally or instead of the outlets at the front and/or rear edge regions. Also, the collection mouth can be circular or oval with an outlet and curved surface provided continuously therearound. Further, the duct can be rectangular, circular or oval.

The collection container 9 is a loose-woven bag which is detachably mounted on hooks 37 at the other end region of the duct 3, the bag itself acting as an air flow escape filter. Alternatively, a disposable plastic bag can be detachably secured to the other end region of the duct 3 and in this case an air flow escape filter has to be additionally provided.

Whilst the motor 11 is described as being an electric motor 11 and this motor powers a fan which draws ambient air through a filter 39, and passes the air to the collection head 5, an internal combustion engine can be substituted to power a centrifugal blower fan, or an air compressor can be alternatively substituted.

In operation the air is blown over the or each curved surface in the vicinity of the collection mouth 7, this air tending to cling to the curved surface(s) due to the boundary layer effect and as with an aircraft wing, a drop in pressure is experienced above the curved surface causing an amount of lift to the loose material beneath the collection head 5. The loose material is thus drawn towards the curved surface(s) where it is entrained with the air flow along the curved surface(s) and into the duct 3. The amount of lift is dependent on the radius and nature of the curved surface, the amount of air flow and the speed of air flow. By suitable selection of these parameters, the desired performance for any particular situation can be achieved.

Whilst the presently preferred embodiment illustrated in the accompanying drawings is a hand-held and operated device, it is envisaged that wheels or rollers can be provided on large machines for use such as in parks and towns, to collect litter, leaves etc.

Whatever the required function, the present invention provides a collection device with a smooth profile duct which is free of any ancillary equipment such as an impeller, thereby obviating any possible obstruction or need for a tortuous path, for the loose material entrained in the air flow in the duct.

## Claims

1. A collection device for removing loose material from a fixed surface by means of a stream of air, the collection device comprising an elongate duct (3) through which the loose material is conveyed from an upstream end region of the duct defining a collection mouth (7) towards a downstream region of the duct when the collection mouth (7) is disposed in a ready to collect position relative to the fixed surface, a source of pressure air and means for feeding pressure air to one or more air outlets (23,25) disposed in the region of the collection mouth (7) to provide a stream of air for use in conveying loose material lifted from the fixed surface, into and along the duct, characterised in that an air outlet (23,25) opens directly into the duct (3) and is located in the region of one end of a control surface (27,29), at least part of which control surface is generally convex, the control surface (27,29) extending downstream of the duct (3), said air outlet (23,25) being arranged to direct a stream of air over the control surface (27,29) whereby the stream of air issuing from the air outlet (23,25) is directed in a direction transverse of the longitudinal axis of the duct (3), and is directed within the duct and generally downstream within the duct, when the collection mouth is spaced above the fixed surface, the stream of air issuing from the air outlet (23,25) inducing an additional flow of atmospheric air into the duct (3) via the collection mouth (7) to assist in lifting loose material from the fixed surface and in conveying the material downstream within the duct.

2. A collection device as claimed in claim 1, wherein said at least one air outlet (23,25) is laterally offset outwardly of the throughflow cross section of the duct (3).

3. A collection device as claimed in claim 1 or claim 2, wherein the duct (3) is substantially unobstructed along its length.

4. A collection device as claimed in claim 1, wherein the or each air outlet (23, 25) is disposed within said collection mouth (7).

5. A collection device as claimed in any one of claims 1 to 4, wherein the or each air outlet (23, 25) is arranged to direct said air flow in a direction which is inclined towards the longitudinal axis of said elongate duct (3).

6. A collection device as claimed in any one of the preceding claims, wherein the or each air outlet (23) leads from a plenum chamber (31), a further controllable air flow outlet (32) leading from the plenum chamber (31) to allow air to flow from the plenum chamber (31) to outside the device.

7. A collection device as claimed in any one of the preceding claims, wherein the or each air outlet (23, 25) is in the form of a narrow slot, one side (30) of which slot is coplanar with the adjacent convex surface (27, 29).

8. A collection device as claimed in any one of the preceding claims, wherein the collection mouth (7) is generally rectangular with the or each air outlet (23, 25) extending as a narrow slot which extends across the width of the collection mouth (7).

9. A collection device according to claim 8, wherein the or each air outlet (23, 25) leads from a plenum chamber (31, 35), a number of angled baffles (33) being provided in the plenum chamber (31) to provide for an even distribution of the air flow across the slot forming the air flow outlet (23).

10. A collection device as claimed in any one of the preceding claims, wherein two such air outlets (23,25) are provided, said air outlets (23, 25) being directed towards each other, located at opposite portions of the collection mouth (7), and arranged to, in use, direct air over respective curved flow control surfaces (27, 29).

11. A collection device as claimed in any one of the preceding claims, the said device being adapted to be hand-held with the said collection mouth (7) aligned with a floor surface or ground constituting the said fixed surface, with the duct (3) then being inclined to the ground or floor surface.

12. A collection device as claimed in any one of the preceding claims, wherein the or each air outlet (23, 25) is in the form of a slot which is aligned with the adjacent peripheral region of the collection mouth (7).

13. A collection device as claimed in any one of the preceding claims, wherein an integral motordriven fan means (11) is arranged to discharge air through the or each air outlet (23, 25).

14. A collection device as claimed in any one of the preceding claims, wherein a removable collection container (9) is arranged to collect and retain loose material which is conveyed towards said downstream region of said duct (3).

## Patentansprüche

1. Eine Sammelvorrichtung zum Entfernen losen Materials von einer festen Fläche anhand eines Luftstroms, wobei die Sammelvorrichtung folgendes umfaßt: einen Langkanal (3), durch welchen das lose Material von seiner stromaufwärts gelegenen, Sammelmündung (7) bildenden Kopfzone zu einer stromabwärts gelegenen Zone des Kanals befördert wird, wenn Sammelmündung (7) eine im Verhältnis zur festen Fläche sammelbereite Stellung einnimmt, sowie eine Druckluftquelle und Vorrichtungen zur Weiterleitung der Druckluft an eine oder mehrere, im Bereich von Sammelmündung (7) vorgesehene Luftaustrittsöffnungen (23, 25), um den Luftstrom zur Beförderung des von der festen Fläche hochgenommenen losen Materials in und durch den Kanal zu führen, dadurch gekennzeichnet, daß Luftaustrittsöffnung (23, 25) direkt in Kanal (3) mündet und sich in einem Endbereich von Leitfläche (27, 29) befindet, die generell zumindest teilweise nach außen gewölbt ist und sich von Kanal (3) stromabwärts erstreckt, sowie daß besagte Luftaustrittsöffnung (23, 25) so angeordnet ist, um einen Luftstrom über Leitfläche (27, 29) zu richten, wobei der aus Luftaustrittsöffnung (23, 25) austretende Luftstrom in eine quer zur Längsachse von Kanal (3) verlaufende Richtung gezielt und in den Kanal geführt wird, worin sich der Luftstrom generell abwärts bewegt, sobald sich die Sammelmündung oberhalb der festen Fläche befindet, und wobei der aus Luftaustrittsöffnung (23, 25) austretende Luftstrom eine weitere Strömung atmosphärischer Luft in Kanal (3) über Sammelmündung (7) auslöst, um das Hochheben des losen Materials von der festen Fläche und dessen Stromabwärtsbeförderung in dem Kanal zu fördern.

2. Eine Anspruch 1 entsprechende Sammelvorrichtung mit besagten Luftaustrittsöffnungen (23, 25), von denen mindestens eine Öffnung äußerlich des Durchflußquerschnitts von Kanal (3) seitlich versetzt ist.

3. Eine Sammelvorrichtung entsprechend Anspruch 1 oder Anspruch 2, deren Kanal (3) im wesentlichen über seine gesamte Länge im Inneren unbehindert bleibt.

4. Eine Sammelvorrichtung entsprechend Anspruch 1, deren Luftaustrittsöffnung bzw. -öffnungen (23, 25) jeweils innerhalb besagter Sammelmündung (7) angeordnet ist bzw. sind.

5. Eine Sammelvorrichtung entsprechend jedem der Ansprüche 1 bis 4, deren Luftaustrittsöffnung bzw. -öffnungen (23, 25) jeweils so angeordnet ist bzw. sind, um besagten Luftstrom in eine zur Längsachse des besagten Langkanals (3) geneigten Richtung zu führen.

6. Eine jedem vorstehenden Anspruch entsprechende Sammelvorrichtung mit Luftaustrittsöffnung bzw. -öffnungen (23) und einem weiteren steuerbaren Luftstromaustritt (32), die jeweils von Plenumkammer (31) führen, damit Luft von Plenumkammer (31) zur Außenseite der Vorrichtung strömen kann.

7. Eine jedem vorstehenden Anspruch entsprechende Sammelvorrichtung mit jeweils als enger Schlitz ausgeführten Luftaustrittsöffnung (23, 25), wobei der Schlitz an einer Seite (30) in derselben Ebene wie die angrenzende, konvexe Fläche (27, 29) liegt.

8. Eine jedem vorstehenden Anspruch entsprechende Sammelvorrichtung mit generell rechteckiger Sammelmündung (7), wobei sich die als enger Schlitz ausgeführte(n) Luftaustrittsöffnung(en) (23, 25) jeweils über die Weite von Sammelmündung (7) ausdehnt (ausdehnen).

9. Eine Anspruch 8 entsprechende Sammelvorrichtung mit jeweils von einer Plenumkammer (31, 35) austretenden Luftaustrittsöffnung(en) (23, 25), wobei in Plenumkammer (31) eine Anzahl schräger Prallplatten (33) angeordnet ist, um den Luftstrom gleichmäßig über die als Schlitz ausgebildete Luftaustrittsöffnung (23) zu verteilen.

10. Eine jedem vorstehenden Anspruch entsprechende Sammelvorrichtung mit zwei Luftaustrittsöffnungen (23, 25) dieser Art, wobei die besagten, an gegenüberliegenden Teilen von Sammelmündung (7) vorgesehenen Luftaustrittsöffnungen (23, 25) zueinanderweisen und so angeordnet sind, daß sie in Gebrauch die Luft über die jeweiligen, gekrümmten Strömungsleitflächen (27, 29) führen.

11. Eine jedem vorstehenden Anspruch entsprechende Sammelvorrichtung in einer mit den Händen tragbaren Ausführung, wobei besagte Sammelmündung (7) mit einem der besagten festen Fläche entsprechenden Fuß- oder Erdboden ausgerichtet und Kanal (3) dann auf die Fuß- oder Erdbodenfläche gerichtet wird.

12. Eine jedem vorstehenden Anspruch entsprechende Sammelvorrichtung mit jeweils als enger Schlitz ausgeführten Luftaustrittsöffnung(en) (23, 25), wobei der Schlitz mit dem angrenzenden Randbereich von Sammelmündung (7) ausgerichtet ist.

13. Eine jedem vorstehenden Anspruch entsprechende Sammelvorrichtung mit integraler Gebläsevorrichtung (11) mit Motorantrieb, die so angeordnet ist, um durch die bzw. jede Luftaustrittsöffnung (23, 25) Luft zu treiben.

14. Eine jedem vorstehenden Anspruch entsprechende Sammelvorrichtung mit abnehmbarem Sammelbehälter (9), der so angeordnet ist, um das in Richtung des stromabwärts liegenden Bereichs des besagten Kanals (3) beförderte lose Material einzusammeln und aufzufangen.

## Revendications

1. Dispositif collecteur pour retirer de la matière libre d'une surface fixe au moyen d'un courant d'air, le dispositif collecteur comprenant un conduit allongé (3) au travers duquel la matière libre est acheminée depuis une zone d'extrémité amont du conduit définissant une bouche collectrice (7) vers une zone aval du conduit quand la bouche collectrice (7) est disposée dans une position prête pour le ramassage par rapport à la surface fixe, une source d'air sous pression et un moyen pour alimenter l'air sous pression vers un ou plusieurs orifices de sortie d'air (23,25) disposés dans la zone de la bouche collectrice (7) pour fournir un courant d'air à utiliser dans l'acheminement de la matière libre soulevée de la surface fixe, dans et le long du conduit, caractérisé en ce qu'un orifice de sortie d'air (23,25) s'ouvre directement dans le conduit (3) et est situé dans la zone d'une extrémité d'une surface de contrôle (27,29), au moins une partie de cette surface de contrôle est généralement convexe, la surface de contrôle (27,29) s'étendant en aval du conduit (3), ledit orifice de sortie d'air (23,25) étant disposé pour diriger un courant d'air par dessus la surface de contrôle (27,29) de telle sorte que le courant d'air sortant de l'orifice de sortie d'air (23,25) est dirigé dans une direction transversale de l'axe longitudinal du conduit (3), et est dirigé au sein du conduit et généralement en aval au sein du conduit, quand la bouche collectrice est espacée au-dessus de la surface fixe, le flux d'air sortant de l'orifice de sortie d'air (23,25) induisant un flux additionnel d'air atmosphérique dans le conduit (3) par l'intermédiaire de la bouche collectrice (7) pour aider à soulever la matière libre de la surface fixe et à acheminer la matière en aval au sein du conduit.

2. Dispositif collecteur selon la revendication 1, dans lequel au moins un orifice de sortie d'air (23,25) est décalé latéralement vers l'extérieur de la section transversale de passage de flux du conduit (3).

3. Dispositif collecteur selon la revendication 1 ou la revendication 2, dans lequel le conduit (3) est sensiblement dégagé de toute obstruction sur sa longueur.

4. Dispositif collecteur selon la revendication 1, dans lequel l'orifice ou chaque orifice de sortie d'air (23, 25) est disposé au sein de ladite bouche collectrice (7).

5. Dispositif collecteur selon l'une quelconque des revendications 1 à 4, dans lequel l'orifice ou chaque orifice de sortie d'air (23, 25) est disposé pour diriger ledit flux d'air dans une direction qui est inclinée vers l'axe longitudinal dudit conduit allongé (3).

6. Dispositif collecteur selon l'une quelconque des revendications précédentes, dans lequel l'orifice ou chaque orifice de sortie d'air (23) débouche d'un collecteur d'air d'aspiration (31), un autre orifice de sortie de flux d'air contrôlable (32) débouchant du collecteur d'air d'aspiration (31) pour permettre à l'air de circuler depuis le collecteur d'air d'aspiration (31) vers l'extérieur du dispositif.

7. Dispositif collecteur selon l'une quelconque des revendications précédentes, dans lequel l'orifice ou chaque orifice de sortie d'air (23, 25) a la forme d'une fente étroite, dont un côté (30) est coplanaire avec la surface convexe adjacente (27, 29).

8. Dispositif collecteur selon l'une quelconque des revendications précédentes, dans lequel la bouche collectrice (7) est généralement rectangulaire, l'orifice ou chaque orifice de sortie d'air (23, 25) s'étendant sous forme de fente étroite qui s'étend sur la largeur de la bouche collectrice (7).

9. Dispositif collecteur selon la revendication 8, dans lequel l'orifice ou chaque orifice de sortie d'air (23, 25) débouche d'un collecteur d'air d'aspiration (31, 35), un certain nombre de déflecteurs inclinés étant foumis dans le collecteur d'air d'aspiration (31) pour fournir une distribution uniforme du flux d'air en travers de la fente formant l'orifice de sortie de flux d'air (23).

10. Dispositif collecteur selon l'une quelconque des revendications précédentes, dans lequel deux tels orifices de sortie d'air (23, 25) sont fournis, lesdits orifices de sortie d'air (23, 25) étant dirigés l'un vers l'autre, situés à des parties opposées de la bouche collectrice (7), et disposés pour, lors de l'emploi, diriger l'air par dessus des surfaces de contrôle courbes respectives (27, 29).

11. Dispositif collecteur selon l'une quelconque des revendications précédentes, ledit dispositif étant adapté pour être portable à la main, ladite bouche collectrice (7) étant alignée avec une surface de plancher ou le sol constituant ladite surface fixe, le conduit (3) étant ensuite incliné par rapport au sol ou à la surface de plancher.

12. Dispositif collecteur selon l'une quelconque des revendications précédentes, dans lequel l'orifice ou chaque orifice de sortie d'air (23, 25) a la forme d'une fente qui est alignée avec la zone périphérique adjacente de la bouche collectrice (7).

13. Dispositif collecteur selon l'une quelconque des revendications précédentes, dans lequel un ventilateur intégré (11) entraîné par un moteur est disposé pour décharger de l'air à travers l'orifice ou chaque orifice de sortie d'air (23, 25).

14. Dispositif collecteur selon l'une quelconque des revendications précédentes, dans lequel un conteneur collecteur amovible (9) est disposé pour collecter et conserver la matière libre qui est acheminée vers ladite zone aval dudit conduit (3).
